# EUROPÄISCHE PATENTSCHRIFT

(11) **EP 3 908 499 B1**
(45) Veröffentlichungstag und Bekanntmachung des Hinweises auf die Patenterteilung: **05.03.2025**
(21) Anmeldenummer: 20700253.6
(22) Anmeldetag: 07.01.2020
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 08.01.2019 DE 102019200150
(43) Veröffentlichungstag der Anmeldung: 17.11.2021
(73) Patentinhaber: thyssenkrupp Presta AG, 9492 Eschen (LI); thyssenkrupp AG, 45143 Essen (DE)
(72) Erfinder: BOUJENFA, Sabrina, 9485 Nendeln (LI); DOMIG, Markus, 6781 Bartholomäberg (AT); HEIGENHAUSER, Benedikt, 3014 Bern (CH)
(74) Vertreter: thyssenkrupp Intellectual Property GmbH
(86) Internationale Anmeldenummer: PCT/EP2020/050197
(87) Internationale Veröffentlichungsnummer: WO 2020/144172

(56) Entgegenhaltungen:
- DE-A1- 102008 007 094
- DE-A1- 102016 220 531
- US-A1- 2017 320 513
- US-A1- 2018 105 196

## Beschreibung

### Stand der Technik

Die Erfindung betrifft eine Lenksäule für ein Kraftfahrzeug, umfassend eine äußere Manteleinheit, die mit der Karosserie eines Kraftfahrzeugs direkt oder indirekt verbindbar ist und in der ein Mantelrohr in Längsrichtung verstellbar gehaltert ist, in dem eine Lenkspindel um ihre in Längsrichtung liegende Längsachse drehbar gelagert ist, und eine Spanneinrichtung, die in eine Fixierstellung bringbar ist, in der sie die Manteleinheit relativ zu dem Mantelrohr festlegt, und in eine Freigabestellung, in der sie eine Verstellung des Mantelrohrs relativ zur Manteleinheit zumindest in Längsrichtung freigibt, wobei die Spanneinrichtung ein in Längsrichtung erstrecktes, an dem Mantelrohr abgestütztes Eingriffselement mit einer parallel zur Längsachse liegenden Oberseite und seitlichen Randseiten aufweist und ein in Längsrichtung an der Manteleinheit abgestütztes Arretierelement, welches von der Spanneinrichtung zur Einstellung der Fixierstellung in Normalenrichtung der Oberseite gegen das Eingriffselement bewegbar ist, wobei an dem Arretierelement und dem Eingriffselement ausgebildete komplementäre Formschlusselemente zur Erzeugung eines in Längsrichtung wirksamen Formschlusses miteinander in Eingriff bringbar sind, und wobei eine Energieabsorptionsvorrichtung zwischen dem Mantelrohr und dem Eingriffselement angeordnet ist, wobei zumindest auf einer der Randseiten des Eingriffselements seitliche Formschlusselemente ausgebildet sind.

Zur Anpassung der Lenkradposition an die Sitzposition des Fahrers eines Kraftfahrzeugs sind Lenksäulen in unterschiedlichen Ausführungsformen im Stand der Technik bekannt. Das am hinteren Ende der Lenkspindel angebrachte Lenkrad kann bei einer gattungsgemä-βen Lenksäule durch eine Verstellung der Lenksäulen-Längsachse im Fahrzeuginnenraum in Längsrichtung positioniert werden.

Die Längenverstellbarkeit wird dadurch realisiert, dass ein inneres Mantelrohr, in dem die Lenkspindel drehbar gelagert ist, relativ zu einer äußeren Manteleinheit in Längsrichtung teleskopartig ein- und ausschiebbar ist und mittels einer lösbaren Spanneinrichtung in unterschiedlichen Längspositionen feststellbar, d.h. lösbar fixierbar ist. Die Spanneinrichtung, auch als Fixier-oder Feststelleinrichtung bezeichnet, wirkt auf die an der Karosserie gehaltene Manteleinheit, wobei in geöffnetem Zustand der Spanneinrichtung - als Freigabestellung oder Löseposition bezeichnet - eine Verschiebung des Mantelrohrs in der Manteleinheit zur Einstellung der Lenkradposition möglich ist. Durch Betätigung der Spanneinrichtung wird zum Feststellen ein Klemmhub erzeugt, so dass im geschlossenen Zustand - auch Fixierstellung oder Feststellposition genannt - das Mantelrohr in der Manteleinheit verspannt ist und im normalen Fahrbetrieb die Lenkradposition unter den zu erwartenden mechanischen Beanspruchungen fixiert ist.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule auch in Fixierstellung der Spanneinrichtung in Längsrichtung zusammenschiebbar zu gestalten, wenn eine hohe Kraft auf das Lenkrad ausgeübt wird, die einen nur im Crashfall auftretenden Grenzwert überschreitet. Um für eine kontrollierte Abbremsung eines auf das Lenkrad auftreffenden Körpers zu sorgen, ist zwischen der Manteleinheit und dem Mantelrohr, die im Normalbetrieb durch die Spanneinrichtung miteinander fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reißlasche oder Verbiegen oder Quetschen eines langgestreckten Verformungselements, etwa eines Biegedrahts oder Biegestreifens.

Eine gattungsgemäße Lenksäule ist in der DE 10 2016 220 531 A1 beschrieben. Die darin beschriebene Spanneinrichtung umfasst ein an dem Mantelrohr angebrachtes Eingriffselement, welches als in Längsrichtung erstreckte Zahnplatte ausgebildet ist. Die Zahnplatte hat eine Oberseite mit einer zur Längsrichtung senkrechten Normalenrichtung. Auf der Oberseite sind in der Normalenrichtung vorstehende Formschlusselemente in Form einer Verzahnung ausgebildet, mit einer Mehrzahl von quer zur Längsrichtung verlaufenden Zähnen. Ein Arretierelement ist in Längsrichtung an der äußeren Manteleinheit abgestützt und als Zahnstein ausgebildet, der auf seiner der Oberseite des Eingriffselements zugewandten Frontseite eine Verzahnung aufweist, die mit der besagten Verzahnung des Eingriffselements korrespondiert. Zum Fixieren wird das Arretierelement durch den Klemmhub der Spanneinrichtung in Normalenrichtung auf die Oberseite des Eingriffselements zu bewegt, bis die Frontseite mit der Oberseite in Kontakt kommt und die Formschlusselemente an Arretier- und Eingriffselement zur Bildung eines in Längsrichtung wirksamen Formschlusses miteinander in Eingriff kommen. Zur Freigabe wird das Arretierelement von der Spanneinrichtung entgegengesetzt in Normalenrichtung vom Eingriffselement abgehoben, so dass der Formschluss der Verzahnungen gelöst wird, und das Mantelrohr in Längsrichtung zur Verstellung der Lenkradposition in der Manteleinheit verschiebbar ist.

Bei der gattungsgemäßen Lenksäule ist das Eingriffselement mit dem inneren Mantelrohr über eine Energieabsorptionseinrichtung verbunden, die im Normalbetrieb eine starre Verbindung zwischen äußerer Manteleinheit und innerem Mantelrohr bildet. Im Crashfall jedoch wird über das Arretierelement eine so große Kraft in das Eingriffselement eingeleitet, so dass sich die Manteleinheit und das Mantelrohr in Längsrichtung gegeneinander bewegen, und ein im Kraftfluss zwischen dem Eingriffselement und dem Mantelrohr eingegliedertes Energieabsorptionselement plastisch verformt wird, wodurch die Bewegung kontrolliert abgebremst wird.

Eine Lenksäule der eingangs genannten Art ist aus der US 2017/320513 A1 bekannt.

Nachteilig ist die aufwendige Fertigung zur Einbringung der Verzahnung in die Oberseite des Eingriffselements. Durch spanende Bearbeitung entsteht ein hoher Werkzeugverschleiß und Zeitaufwand. Außerdem ist die wirksame Haltekraft des Formschlusses abhängig der Profilhöhe der Formschlusselemente in Normalenrichtung und der in Normalenrichtung auf das Arretierelement zur Fixierung von der Spanneinrichtung ausgeübten Eingriffskraft.

Angesichts der vorangehend erläuterten Problematik ist es eine Aufgabe der vorliegenden Erfindung, den Fertigungsaufwand bei der Herstellung einer Lenksäule zu verringern und eine hohe Funktionssicherheit zu gewährleisten.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine äußere Manteleinheit, die mit der Karosserie eines Kraftfahrzeugs direkt oder indirekt verbindbar ist und in der ein Mantelrohr in Längsrichtung verstellbar gehaltert ist, in dem eine Lenkspindel um ihre in Längsrichtung liegende Längsachse drehbar gelagert ist, und eine Spanneinrichtung, die in eine Fixierstellung bringbar ist, in der sie die Manteleinheit relativ zu dem Mantelrohr festlegt, und in eine Freigabestellung, in der sie eine Verstellung des Mantelrohrs relativ zur Manteleinheit zumindest in Längsrichtung freigibt, wobei die Spanneinrichtung ein in Längsrichtung erstrecktes, an dem Mantelrohr abgestütztes Eingriffselement mit einer parallel zur Längsachse liegenden Oberseite und seitlichen Randseiten aufweist und ein in Längsrichtung an der Manteleinheit abgestütztes Arretierelement, welches von der Spanneinrichtung zur Einstellung der Fixierstellung in Normalenrichtung der Oberseite gegen das Eingriffselement bewegbar ist, wobei an dem Arretierelement und dem Eingriffselement ausgebildete komplementäre Formschlusselemente zur Erzeugung eines in Längsrichtung wirksamen Formschlusses miteinander in Eingriff bringbar sind, und wobei eine Energieabsorptionsvorrichtung zwischen dem Mantelrohr und dem Eingriffselement angeordnet ist, wobei zumindest auf einer der Randseiten des Eingriffselements seitliche Formschlusselemente ausgebildet sind, wird erfindungsgemäß vorgesehen, dass das Arretierelement zumindest einen Seitenarm aufweist, der in Fixierstellung eine Randseite umgreift und mit den seitlichen Formschlusselementen der Randseite korrespondierende Formschlusselemente aufweist.

Das erfindungsgemäße Eingriffselement weist wie an sich bekannt eine dem Arretierelement in Normalenrichtung zugewandte Oberseite auf, und Randseiten, welche die Oberseite seitlich, d.h. quer zur Normalenrichtung begrenzen. Die Randseiten können entsprechend in Normalen- und Längsrichtung erstreckte Randflächen aufweisen, die auch als Seitenflächen bezeichnet werden. Von zumindest einer der Seitenflächen stehen Formschlusselemente erfindungsgemäß seitlich quer zur Normalenrichtung vor.

Die Breite der Oberseite wird durch die Abmessung quer zur Normalen- und Längsrichtung zwischen den Randseiten angegeben. Die Höhe der Randseiten entspricht der Abmessung quer zur Längsrichtung, in Normalenrichtung. Bevorzugt kann das Eingriffselement einen flachen, in etwa rechteckigen Querschnitt haben, bei dem die Breite größer ist als die Höhe.

Die Formschlusselemente können bevorzugt als Verzahnung mit quer zur Längsrichtung verlaufenden Zähnen ausgebildet sind, welche quer zur Längsrichtung, zumindest abschnittweise in Normalenrichtung liegende Zahnflanken haben. Das Eingriffselement kann bevorzugt als Zahnplatte ausgebildet sein, bei der die Formschlusselemente auf zumindest einer der Randseiten eine Verzahnung aufweisen. Die Verzahnung kann aus einer Mehrzahl von Zähnen ausgebildet sein, welche zumindest abschnittweise seitlich, quer zur Normalenrichtung vorstehen, und deren Zahnflanken zumindest über einen Teil der Höhe in Normalenrichtung über die Randseite verlaufen.

Die Formschlusselemente können rationell und kostengünstig in die Randseiten eingebracht werden, beispielsweise durch Stanzen, bei dem ein die Kontur der Formschlusselemente aufweisendes Stanzwerkzeug in einem Bearbeitungshub mit einer Bewegungskomponente in Normalenrichtung relativ zum Eingriffselement bewegt wird. Ein streifenförmiges Eingriffselement mit einem flachen Querschnitt kann dadurch als Stanzteil einschließlich der Formschlusselemente an den Randseiten gefertigt werden, wodurch im Vergleich zur Einbringung von Formschlusselementen in die Oberseite der Fertigungsaufwand und der Werkzeugverschleiß geringer sind. Weiters bietet die erfindungsgemäße Lösung den Vorteil, dass ein Überspringen der Formschlusselemente, also eine ungewollte Verlagerung des Eingriffselements und des Arretierelements zueinander in Fixierstellung, bei einer schlagartigen Krafteinleitung, wie beispielsweise in einem Crashfall, wirksam vermieden wird.

Besonders vorteilhaft ist es, dass Formschlusselemente auf den beiden Randseiten ausgebildet sind, und beiderseits des Eingriffselements quer zur Längs- und Normalenrichtung vorstehen. Es kann vorgesehen sein, dass die Formschlusselemente der beiden Randseiten zueinander symmetrisch ausgebildet sind. Alternativ ist es ebenfalls denkbar und möglich, dass die Formschlusselemente der beiden Randseiten zueinander unsymmetrisch ausgebildet sind.

Erfindungsgemäß ist vorgesehen, dass das Arretierelement zumindest einen Seitenarm aufweist, der in Fixierstellung eine Randseite umgreift und mit den seitlichen Formschlusselementen der Randseite korrespondierende Formschlusselemente aufweist. Der Seitenarm steht von dem Arretierelement in Eingriffsrichtung, d.h. in Normalenrichtung zur Oberseite hin vor, und hat eine in Fixierstellung der Randseite gegenüberliegende Innenseite. Die Innenseite erstreckt sich dabei vorzugsweise parallel zur Randseite. Auf der Innenseite befinden sich komplementäre Formschlusselemente, die mit den seitlichen Formschlusselementen an dem Eingriffselement korrespondieren. Beispielsweise ist das Arretierelement als Zahnstein ausgebildet, bei dem auf der Innenseite Zähne ausgebildet sind, deren Zahnflanken parallel zu den Zahnflanken der seitlichen Verzahnung an dem Eingriffselement in Normalenrichtung verlaufen. Bei der Fixierung werden die korrespondierenden seitlichen Formschlusselemente von Arretier- und Eingriffselement relativ zueinander bewegt, wobei die den Formschluss erzeugenden Zahnflanken entlang ihrer Erstreckung in Normalenrichtung aneinander entlang bewegt werden. Daraus resultiert der Vorteil, dass die Formschlusselemente bereits zu Beginn der Fixierbewegung und damit schneller mit ihrem wirksamen Zahnquerschnitt in Eingriff kommen, als wenn die Zähne quer zu ihrer Erstreckung in Eingriff gebracht werden, wie bei den bekannten Formschlusselementen auf der Oberseite.

Bevorzugt sind auf den beiden Randseiten des Eingriffselements seitliche Formschlusselemente ausgebildet. Beispielsweise kann das Eingriffselement als Zahnplatte ausgebildet sein, bevorzugt mit einem flachen rechteckigen Querschnitt, wobei beide Randseiten eine Verzahnung aufweisen, mit jeweils einer Vielzahl von Zähnen, deren Zahnflanken zumindest abschnittweise parallel zur Normalenrichtung der Oberseite verlaufen. Eine derartige beidseitige Verzahnung kann rationell durch Stanzen gefertigt werden.

Bevorzugt weist dass das Arretierelement zwei einander gegenüberliegende Seitenarme auf, zwischen denen das Eingriffselement aufnehmbar ist. Die Seitenarme stehen in Normalenrichtung gegen das Eingriffsteil vor, wodurch das Arretierelement umgekehrt U-förmig ausgebildet ist. Dadurch, dass in Fixierstellung das Arretierelement das Eingriffselement zwischen den einander gegenüberliegenden Innenseiten der Seitenarme umgreift, wird ein seitlich quer zur Längsrichtung wirksamer Formschluss zwischen Arretier- und Eingriffselement erzeugt.

Die beiden Seitenarme haben einander quer zur Längsrichtung gegenüberliegende Innenseiten. Zumindest auf einer der Innenseiten sind mit dem Eingriffselement korrespondierende, in Formschlusseingriff bringbare Formschlusselemente ausgebildet. Vorzugsweise weisen beide Seitenarme und beide Randseiten Formschlusselemente auf. Bevorzugt ist das Arretierelement als Zahnstein mit Verzahnungen ausgebildet, welche mit den seitlichen Verzahnungen der Zahnplatte korrespondieren. In der Feststellposition umgreift das Eingriffselement mit seinen beiden Seitenarmen die Randseiten des Eingriffselements zumindest teilweise. Dabei ist das Eingriffselement quer zur Längsrichtung formschlüssig zwischen den Seitenarmen aufgenommen, und gleichzeitig wird durch die formschlüssig ineinander eingreifenden seitlichen Formschlusselemente an den Seitenarmen des Arretierelements und den Randseiten des Eingriffselements der in Längsrichtung wirksame Formschluss erzeugt.

Ein Vorteil der zuletzt genannten Ausführung ist, dass die formschlüssige Verbindung der erfindungsgemäßen seitlichen Formschlusselemente in der Feststellposition, also der Fixierstellung, kraftfrei verriegelt ist. Das bedeutet, dass von der Spanneinrichtung in Eingriffsrichtung, also der Normalenrichtung, in der Fixierstellung keine Haltekraft ausgeübt werden muss, um den Formschluss aufrecht zu erhalten. Dadurch, dass die beiden Seitenarme das Eingriffselement seitlich umgreifen, sind die Formschlüsse zwischen den Randseiten und den Seitenarmen quer zur Normalenrichtung seitlich gestützt und gesichert, dadurch bleibt die Formschlussverbindung auch bei sehr hohen Belastungen durch Kraftspitzen im Crashfall erhalten, auch wenn die Spanneinrichtung beschädigt würde.

Eine vorteilhafte Ausführung sieht vor, dass die seitlichen Formschlusselemente schräg gegen die Normalenrichtung geneigt sind. Eine oder beide Randseiten können zumindest abschnittweise Schrägflächen aufweisen, auf denen verkippt gegen die Normalenrichtung die Formschlusselemente verlaufen, und die, im Querschnitt gesehen, zur Oberseite hin gegen die Normalenrichtung zusammenlaufen. Eine solche Schrägfläche kann beispielsweise diagonal in einem Kantenbereich zwischen Ober- und Randseite angeordnet sein, so dass sie mit der Oberseite einen Winkel von größer 90° einschließt. Insbesondere dadurch, dass entlang beider Randseiten Schrägflächen mit geneigten Formschlusselementen angeordnet sind, kann ein zur Oberseite hin keilförmig zusammenlaufender Querschnitt des Eingriffselements realisiert sein. Der keilförmige Querschnitt erleichtert beim Fixieren die Einführung des Eingriffselements in Normalenrichtung zwischen die beiden Seitenarme eines im Querschnitt U-förmigen Arretierelements. Die Schrägflächen sorgen als Einführschrägen dafür, dass das Arretierelement beim Fixieren selbsttägig quer zur Längsrichtung auf dem Eingriffselement zentriert wird. Daraus resultiert als weiterer Vorteil, dass die auf den Schrägflächen geneigt verlaufenden Formschlusselemente, beispielsweise Verzahnungen mit zumindest abschnittweise schräg zur Normalenrichtung verlaufenden Zähnen, auf beiden Randseiten gleichmäßig und sicher in Eingriff gelangen. Dies ist insbesondere vorteilhaft, wenn beide Randseiten Formschlusselementen auf Schrägflächen aufweisen, die bevorzugt spiegelsymmetrisch gegeneinander geneigt sind.

Alternativ oder zusätzlich kann das Arretierelement ebenfalls schräg gegen die Normalenrichtung geneigte seitliche Formschlusselemente aufweisen, welche auf Schrägflächen auf der Innenseite eines oder beider Seitenarme ausgebildet sein können. Dadurch weitet sich der zum Eingriffselement hin offene Zwischenraum zwischen den Seitenarmen in Richtung zum Eingriffselement hin V-förmig auf. Auf diese Weise können ebenfalls Einführschrägen realisiert sein, welche das Aufsetzen beim Fixieren erleichtern, und für eine gegenseitige Zentrierung von Arretier- und Eingriffselement sorgen können.

Es ist möglich, dass das Arretierelement oder das Eingriffselement schräg verlaufende Formschlusselemente aufweisen, oder dass sowohl an Arretier- und Eingriffselement miteinander geneigt verlaufende Formschlusselemente auf miteinander korrespondierenden Schrägflächen angeordnet sind. Beispielsweise können komplementäre Zähne zumindest abschnittweise im Wesentlichen gleich geneigt sein.

Durch die geneigt angeordneten Formschlusselemente ist es weiterhin möglich, über die Keilwirkung eine Kraftübersetzung zu erzeugen, wodurch die im Eingriff zwischen den Formschlusselementen wirkende Kraft größer ist als die zum Fixieren mittels der Spannvorrichtung in Normalenrichtung ausgeübte Eingriffskraft. Daraus resultiert ein besonders sicherer Formschlusseingriff.

Schräg verlaufende Formschlusselemente können im Prinzip wie für die Randseite beschrieben durch Stanzen, Kaltumformen oder ähnlich rationelle Umformverfahren eingebracht werden.

Es ist weiterhin möglich, dass die Formschlusselemente zumindest abschnittweise konvex oder konkav ausgebildet sind. Die Formschlusselemente, beispielsweise Zähne einer Verzahnung, verlaufen quer zur Längsrichtung, und können dabei linear langgestreckt auf einer im Wesentlichen ebenen Grundfläche angeordnet sein, erfindungsgemäß auf einer Randseite in Normalenrichtung, oder dagegen schräg geneigt auf einer Schrägfläche angeordnet, oder wie im Stand der Technik auf einer ebenen Oberseite. Es ist jedoch in einer Weiterbildung der Erfindung auch möglich, dass die Formschlusselemente auf einer im Querschnitt nach außen ausgeformten oder nach innen eingeformten, vorzugsweise gewölbten Grundform angeordnet sind. Beispielsweise kann die Randseite oder der Kantenbereich zwischen Randseite und Oberseite im Querschnitt konvex ausgebildet, d.h. nach außen gerundet sein, bevorzugt bogenförmig, wobei die Zähne ebenfalls der konvex gewölbten Grundfläche folgend einen konvexen Verlauf haben. Es ist ebenfalls möglich, eine Seite rinnenförmig-konvex auszugestalten. Innerhalb eines konvexen oder konkaven Verlaufs können die Formschlusselemente unterschiedliche Neigungen gegen die Normalenrichtung einnehmen. Dadurch können die spezifischen Vorteile von unterschiedlich geneigten Formschlusselementen in einer Bauform realisiert werden. Außerdem können durch gerundete Formschlusselemente geringfügige Fehlorientierungen, beispielsweise aufgrund von Maßtoleranzen oder wechselnden Betriebsbedingungen, kompensiert werden, wodurch der Formschlusseingriff toleranzunempfindlicher gestaltet werden kann.

Es ist möglich, dass die Formschlusselemente an Arretierungs- und Eingriffselement beide eben, oder konkav und komplementär konvex ausgestaltet sind, oder beide konvex, oder konkav und eben.

Es ist denkbar und möglich, dass das Eingriffselement zumindest teilweise auf der Oberseite Formschlusselemente aufweist. Vorzugsweise können erfindungsgemäß in zumindest einer der Randseiten ausgebildete Formschlusselemente, beispielsweise Zähne einer Verzahnung, um den Kantenbereich zwischen Rand- und Oberseite herum verlaufen, und weiter über zumindest einen Teilbereich der Oberseite fortgesetzt sein. Es ist beispielsweise möglich, dass die Formschlusselemente über im Kantenbereich angeordnete schräge oder gerundete Grundflächen verlaufen.

Vorzugsweise kann auf der Oberseite des Eingriffselements ein von Formschlusselementen freier Bereich vorgesehen sein, der zumindest 20% der Breite des Eingriffselements beträgt.

Es ist vorteilhaft, dass das Eingriffselement ein Deformationselement aufweist, das mit einem zwischen dem Eingriffselement und dem Mantelrohr angeordneten Energieabsorptionselement wirkverbunden ist. Die Energieabsorptionsvorrichtung ist eingerichtet und angeordnet, dass ein Energieabsorptionselement bei einer relativen Bewegung von Eingriffselement und Mantelrohr im Crashfall, wenn sich die Spanneinrichtung in Fixierstellung befindet, unter Absorption kinetischer Energie plastisch deformiert wird. Über das Deformationselement kann das Eingriffselement die kinetische Energie in das Energieabsorptionselement einleiten. Das Deformationselement bewirkt im Crashfall eine plastische Verformung, beispielsweise durch Biegen, Trennen, Quetschen, Dehnen, Zerspanen oder dergleichen mindestens eines Energieabsorptionselements, oder Kombinationen davon.

Mindestens ein Deformationselement kann bevorzugt einstückig mit dem Eingriffselement ausgebildet sein, besonders bevorzugt integral einstückig. Dadurch wird eine vereinfachte und kostengünstige Fertigung und Montage ermöglicht.

Eine vorteilhafte Ausführung der Erfindung sieht vor, dass das Eingriffselement auf seiner der Oberseite abgewandten, dem Mantelrohr zugewandten Unterseite Führungsmittel aufweist. Die Führungsmittel sind ausgestaltet zur Führung des Eingriffselements relativ zum Mantelrohr in Längsrichtung, und bewirken im Crashfall eine definiert geführte Bewegung des Eingriffselements relativ zum Mantelrohr, so dass das dazwischen angeordnete Energieabsorptionselement definiert deformiert wird. Das Eingriffselement kann beispielsweise als Reiter oder Gleitstück ausgebildet sein, welches auf einer Schiene oder einem Vorsprung an dem Mantelrohr in Längsrichtung gleiten kann, oder umgekehrt. Die Führungsmittel können dann einfach auf der Unterseite des Eingriffselements, die der Oberseite abgewandt und dem Mantelrohr zugewandt ist, eine in Längsrichtung durchgehende Führungsnut oder dergleichen umfassen, wodurch eine quer zur Längsrichtung formschlüssige Führung erzeugt wird.

Es kann vorgesehen sein, dass das Energieabsorptionselement einen in Längsrichtung langgestreckten, an dem Mantelrohr befestigten Verformungsstreifen aufweist, der in Längsrichtung unter plastischer Verformung relativ zu einem Deformationselement entlang bewegbar ist. Der Verformungsstreifen kann als in Längsrichtung langgestreckter Streifen, beispielsweise als gestanzter Blechstreifen, ausgebildet sein, der in seinen Endbereichen außen an dem Mantelrohr fixiert ist. An dem Eingriffselement bevorzugt an der Unterseite angeordnete Deformationselemente können Verformungsmittel aufweisen, die mit den mit dem Verformungsstreifen in Eingriff stehen. Die Verformungsmittel können beispielsweise einen den Verformungsstreifen umgreifenden Durchgang aufweisen, dessen Durchgangsquerschnitt kleiner ist als der Außenquerschnitt des Verformungsstreifens. Wird im Crashfall das Mantelrohr relativ zum Eingriffselement bewegt, wird der Verformungsstreifen der Länge nach durch den Durchgang hindurchgezwängt, und dabei gequetscht und/oder zerspant, wodurch kinetische Energie absorbiert wird.

Der Verformungsstreifen kann in einer an dem Eingriffselements angeordneten, in Längsrichtung verlaufenden Führungsnut geführt sein. Dadurch erfüllt der Verformungsstreifen eine zweifache Funktion als Energieabsorptions- und Führungselement.

Alternativ zu dem beschriebenen Verformungsstreifen kann das Energieabsorptionselement einen Biegestreifen oder -draht umfassen, der von einem Deformationselement des Eingriffsteils im Crashfall fortlaufend umgebogen wird, oder zwischen dem Deformationselement und dem Mantelrohr abgestützt durchlaufend umgebogen wird. Andere bekannte Energieabsortionssysteme können ebenfalls realisiert werden, beispielsweise durch einen als Dorn an dem Eingriffsteil ausgebildetes Deformationselement, welcher einen Schlitz eines Energieabsorptionselements fortlaufend aufweitet, oder durch eine auftrennbare Reißlasche oder dergleichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in teilweise auseinander gezogenem Zustand,
- Figur 3: eine Teilansicht der Lenksäule gemäß Figur 1 und 2 in teilweise auseinander gezogenem Zustand,
- Figur 4: ein erfindungsgemäßes Eingriffselement und ein korrespondierendes Arretierelement in einer ersten Ausführung,
- Figur 5: ein schematisierter Querschnitt des Eingriffselements gemäß Figur 4,
- Figur 6: das Arretierelement gemäß Figur 4,
- Figur 7: ein erfindungsgemäßes Eingriffselement und ein Arretierelement in einer dritten Ausführung,
- Figur 8: das Arretierelement gemäß Figur 6,
- Figur 9: eine zweite Ausführungsform einer Energieabsorptionsvorrichtung in einer Darstellung analog Figur 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

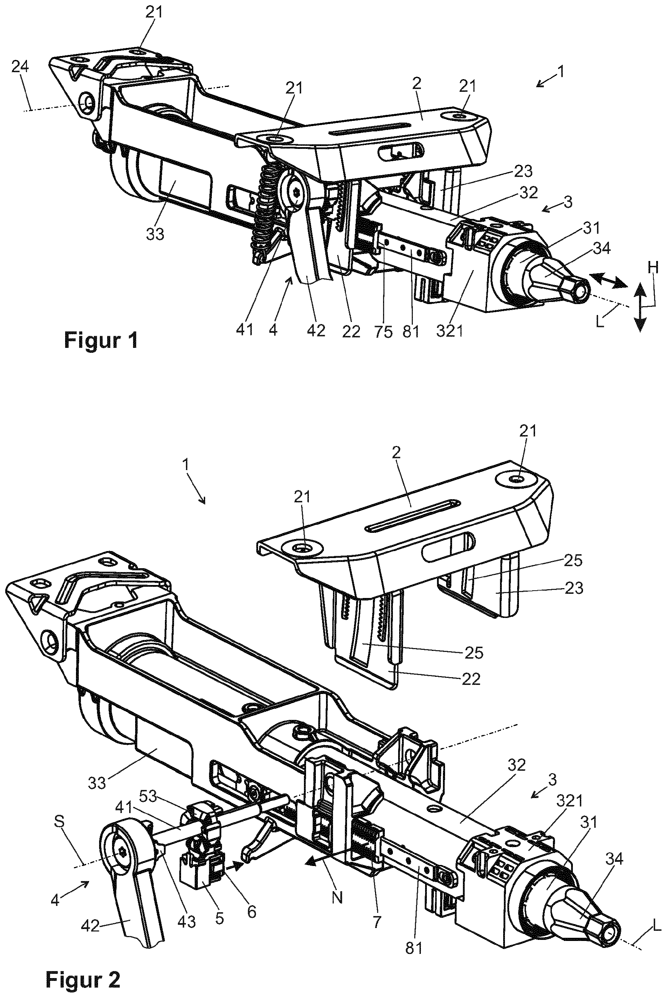

Figuren 1 und 2 zeigen in perspektivischer Ansicht schräg von hinten - bezogen auf die Fahrtrichtung eines hier nicht gezeigten Kraftfahrzeugs - eine Lenksäule 1, die eine Trageinheit 2 aufweist, mit Befestigungsmitteln 21 zur Verbindung mit der nicht dargestellten Karosserie des Kraftfahrzeugs, beispielsweise wie dargestellt Befestigungsöffnungen mit unterschiedlichen Durchmessern zur verbesserten Montage im Kraftfahrzeug. Von der Trageinheit 2 erstrecken sich zwei einander gegenüberliegende Seitenwangen 22 und 23 nach unten.

Zwischen den Seitenwangen 22 und 23 ist eine Stelleinheit 3 aufgenommen, die eine um ihre Längsachse L drehbar in einem inneren Mantelrohr 32 gelagerte Lenkspindel 31 aufweist. Das Mantelrohr 32 in Längsrichtung, in Richtung der Längsachse L längsverschiebbar in einer äußeren Manteleinheit 33 aufgenommen, wie schematisch mit einem Doppelpfeil angedeutet ist. Am bezogen auf die Fahrtrichtung hinterem Ende weist die Lenkspindel 31 einen Befestigungsabschnitt 34 zur drehfesten Anbringung eines nicht dargestellten Lenkrads auf.

Das Mantelrohr 32 weist ein aus einem Kunststoff gebildetes Anbringungselement 321 auf, welches fest mit dem Mantelrohr 32 verbunden ist, beispielsweise mittels einer Schraubverbindung, Nietverbindung oder mittels einer Ultraschallschweißoperation. Dieses Anbringungselement 321 weist eine Anbringungsstruktur mit Bohrungen auf, so dass ein hier nicht dargestelltes Lenkstockschaltermodul mit dem Anbringungselement 321 der Lenksäule 1 verbindbar ist.

Die Manteleinheit 33 ist um quer zur Längsachse L liegende Schwenkachse 24 an der Trageinheit 2 schwenkbar gelagert. Dadurch kann die Stelleinheit 3 zur Einstellung der Hö-henposition des Lenkrads zwischen den Seitenwangen 22 und 23 relativ zur Trageinheit 2 in Höhenrichtung H auf und ab bewegt werden in dem es um die Schwenkachse 24 verschwenkt wird, wie mit einem Doppelpfeil angedeutet.

Eine Spanneinrichtung 4 ist ausgebildet, um die Stelleinheit 3 wahlweise in Fixierstellung relativ zur Trageinheit 2 zu verspannen oder in Freigabestellung eine Verstellung in Richtung der Längsachse L und/oder in Höhenrichtung H zu ermöglichen.

Die Spanneinrichtung 4 weist als Betätigungselement einen Spannbolzen 41 auf, der sich quer zur Längsachse L durch Langlöcher 25 in den einander gegenüberliegenden Seitenwangen 22 und 23 erstreckt. Die Langlöcher 25 sind in Höhenrichtung H ausgedehnt. An einem Ende des Spannbolzens 41 ist ein Betätigungshebel 42 drehfest abgebracht, während das andere Ende drehbar, aber zugfest an der Seitenwange 23 gelagert ist.

Mit dem Betätigungshebel 42 ist eine Hubscheibe 43 drehfest verbunden, welche als Nockenscheibe ausgebildet ist mit in Achsrichtung des Spannbolzens 41, d.h. der Spannachse S stirnseitig axial von außen gegen die Seitenwange 22 vorstehenden Nocken.

Auf dem Spannbolzen 41 ist zwischen der Hubscheibe 43 und der Außenseite der Seitenwange 22 ein Fixierelement 5 angeordnet. Der Spannbolzen 51 erstreckt sich in Richtung der Spannachse S durch eine Öffnung des Fixierelement 5 hindurch, durch die, wie in Figur 2 erkennbar. Relativ zum Fixierelement 5 ist der Spannbolzen 41 drehbar.

Das Fixierelement 5 weist eine als Nockenscheibe ausgebildete Druckscheibe 53 auf. Diese hat eine kreisscheibenförmige Grundform und ist koaxial zur Öffnung 52 angeordnet. Auf ihrer axialen Stirnseite, die im zusammengebauten Zustand der Hubscheibe 43 zugewandt ist, weist die Druckscheibe 53 axial vorstehende Nocken auf. Die Nocken wirken mit den korrespondierenden Nocken der an dem Betätigungshebel 42 angebrachten Hubscheibe 43 zur Bildung eines an sich bekannten Hubgetriebes zusammen. Zur Fixierung wird der Spannbolzen 41 mittels des Betätigungshebels 42 oder alternativ mittels eines nicht dargestellten motorischen Antriebs um seine Spannachse S gedreht. Das Fixierelement 5 ist bezüglich Drehung fest an der Seitenwange 22 gehaltert. Dadurch führen die Hubscheibe 43 und die Druckscheibe 53 einen relativen Hub in axialer Richtung des Spannbolzens 41 aus, so dass die Druckscheibe 53 und damit das Fixierelement 5 quer zur Längsachse L von außen gegen die Seitenwange 22 angepresst wird. Dadurch wird die Manteleinheit 33 und damit die Stelleinheit 3 zwischen den Seitenwangen 22 und 23 eingespannt bzw. eingeklemmt.

An dem Fixierelement 5 ist ein erfindungsgemäß ausgestaltetes Arretierelement 6 angebracht, welches bevorzugt als Zahnstein ausgebildet sein kann und weiter unten noch im Detail erläutert wird. Das Arretierelement 6 ragt von außen gegen die Stelleinheit 3 gerichtet durch das Langloch 25, und ist darin in Längsrichtung an der Manteleinheit 3 abgestützt.

Von der Spanneinrichtung 4 ist das Arretierelement 6 zur Einstellung der Fixierstellung in Richtung der Spannachse S gegen ein Eingriffselement 7 bewegbar, welches an dem Mantelrohr 32 angebracht ist. Diese Eingriffsbewegung erfolgt in Richtung der Spannachse S, wie in Figur 2 mit dem Pfeil angedeutet, entgegen einer auf der Oberseite des Eingriffselements 7 senkrecht stehenden Normalenrichtung N, wie weiter unten noch erläutert wird.

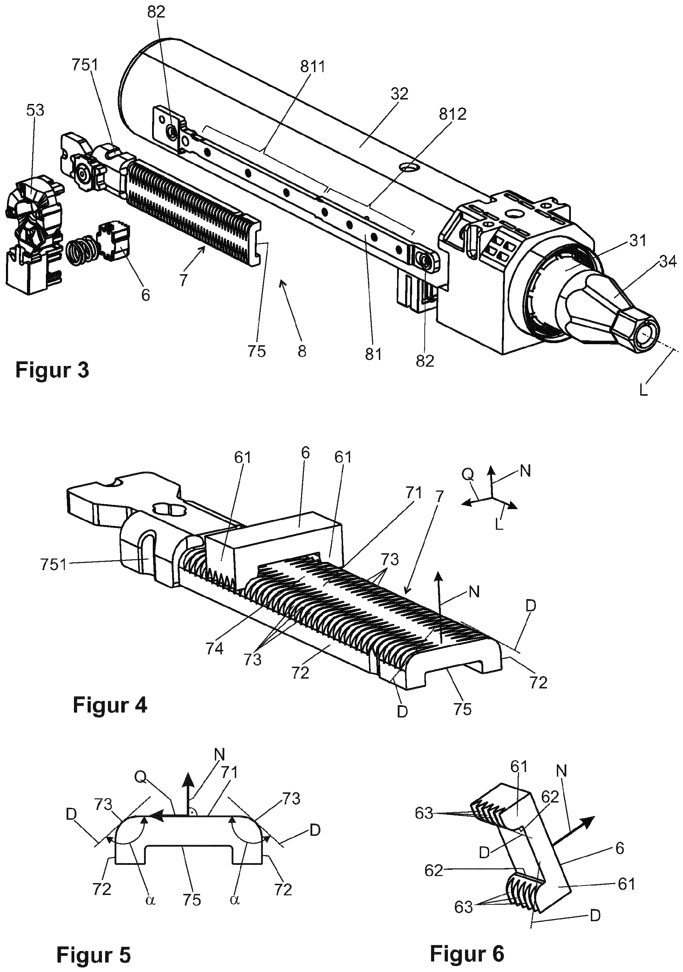

Zwischen dem Eingriffselement 7 und dem Mantelrohr 32 ist eine Energieabsorptionsvorrichtung 8 angeordnet, die ein Energieabsorptionselement 81 aufweist. In der in den Figuren 1, 2 und 3 gezeigten Ausführung ist das Energieabsorptionselement 81 als in Längsrichtung langgestreckter Verformungsstreifen ausgebildet, der an seinen Enden mittels Befestigungselementen 82 wie Nieten oder dergleichen unlösbar außen an dem Mantelrohr 32 befestigt ist, wie in Figur 3 erkennbar.

In Figur 4 ist das Arretierelement 5 zusammen mit dem Eingriffselement 7 im Wirkeingriff in der Fixierstellung dargerstell, d.h. im gegenseitigen Formschlusseingriff. Figur 5 zeigt das Eingriffselement 7 in einem schematisierten Querschnitt, wobei die Schnittebene parallel zur Normalenrichtung N ist. Zur Erhöhung der Übersichtlichkeit wurde die Schraffierung weggelassen. Figur 6 zeigt das Arretierelement 6 einzeln freigestellt.

Das Eingriffselement 7 hat eine Oberseite 71, die eine Flächennormale in Normalenrichtung N hat. Die Oberseite erstreckt sich flächenhaft in Längsrichtung L, und quer dazu in Querrichtung Q. Zwei seitliche Randseiten 72 erstrecken in Längsrichtung L und in Normalenrichtung N, und stehen in der gezeigten Ausführung senkrecht zur Oberseite 71. Die Randseiten 72 weisen jeweils eine Verzahnung mit seitlichen Formschlusselementen 73 auf, die als Zähne ausgebildet sind, deren Zahnflanken quer zur Längsachse L verlaufen. Erfindungsgemäß stehen diese seitlichen Formschlusselemente 73 mit ihrem Zahnquerschnitt quer zur Normalenrichtung N seitlich vor, wobei deren Zahnflanken zumindest im oberen Teilbereich der Seitenflächen 72 zumindest teilweise in der Normalenrichtung N verlaufen.

In der Ausführung gemäß Figur 4 ist eine Besonderheit, dass die Formschlusselemente 73 sich über die zwischen der Oberseite 71 und den Randseiten 72 gebildeten Kantenbereiche erstrecken, wobei die Zähne einen bogenförmigen Verlauf haben. Dadurch sind die Formschlusselemente 73 konvex ausgebildet, auf einer die Oberseite 71 mit den Randseiten 72 verbindenden, im Querschnitt bogenförmigen Grundform.

In ihrem Verlauf sind die Zahnflanken dabei zumindest abschnittweise gegen die Normalenrichtung N geneigt, und verlaufen auf geneigten Schrägflächen D, wie in Figur 4 und 5 schematisch eingezeichnet. Während die Randseiten 72 wie dargestellt im rechten Winkel zur Oberseite 71 stehen können, können die Schrägflächen in einem Winkel α (alpha) größer als 90°, und kleiner als 180° gegen die Oberseite 71 geneigt sein: 90°< α (alpha) < 180°.

Die geneigten Formschlusselemente 73 können mit geringerem Fertigungsaufwand als im Stand der Technik erzeugt werden, beispielsweise mittels schräg angesetzter Stanzwerkzeuge oder dergleichen.

Die Formschlusselemente 73 können sich von beiden Randseiten 72 bis auf die Oberseite 71 erstrecken, wobei bevorzugt auf der Oberseite 71 ein von Formschlusselementen 73 freier Bereich 74 verbleibt, der vorzugsweise zumindest 20% der Breite des Eingriffselements 7 beträgt, gemessen in Querrichtung Q.

Das Arretierelement 6 weist zwei Seitenarme 61 auf, die entgegen der Normalenrichtung N gegen die Oberseite 71 gerichtet sind. Figur 6 zeigt eine Ansicht von der Oberseite 71 aus gesehen. Auf ihren quer zu Normalenrichtung N, in Querrichtung Q einander zugewandten Innenseiten 62 sind Formschlusselemente 63 angeordnet, die zu den Formschlusselementen 73 am Eingriffselement 7 komplementär ausgebildet sind. Im gezeigten Beispiel sind auf den Innenseiten 62quer zur Längsachse L verlaufende Zähne ausgebildet, die formschlüssig in die Verzahnung des Eingriffselement 7 eingreifen können zur Erzeugung eines in Richtung der Längsachse L wirksamen Formschlusses.

Von den Innenseiten 62 aus sind die Formschlusselemente 63 zu den vorderen Enden der Seitenarme 61 hin konvex als bogenförmige Zähne ausgebildet. In ihren Verlauf weisen sie eine veränderliche Neigung gegen die Normalenrichtung N auf, und zwar von einer parallelen Lage bis hin zu einer im Wesentlichen quer zur Normalenrichtung N liegenden Ausrichtung. Dabei werden zumindest abschnittweise geneigten Schrägflächen D eingenommen, die in Figur 6 wie in den Figuren 4 und 5 schematisch eingezeichnet sind.

In der in Figur 4 gezeigten Eingriffs- bzw. Fixierstellung greifen die Formschlusselemente 63 zur Bildung eines in Längsrichtung wirksamen Formschlusses in die korrespondierenden Formschlusselemente des Eingriffselements 7 randseitig ein. Das Eingriffselement 7 ist im Querschnitt zumindest teilweise zwischen den Seitenarmen 61 aufgenommen. Dadurch ist das Arretierelement 6 auch quer zur Längsachse L formschlüssig auf dem Eingriffselement 7 fixiert. Durch den konvexen Verlauf ist die Anordnung unempfindlich gegen geringfügige Fehloreintierungen.

Auf seiner der Oberseite 61 abgewandten Unterseite weist das Eingriffselement 7 als Führungsmittel eine in Längsrichtung durchgehende Führungsnut 75 auf.

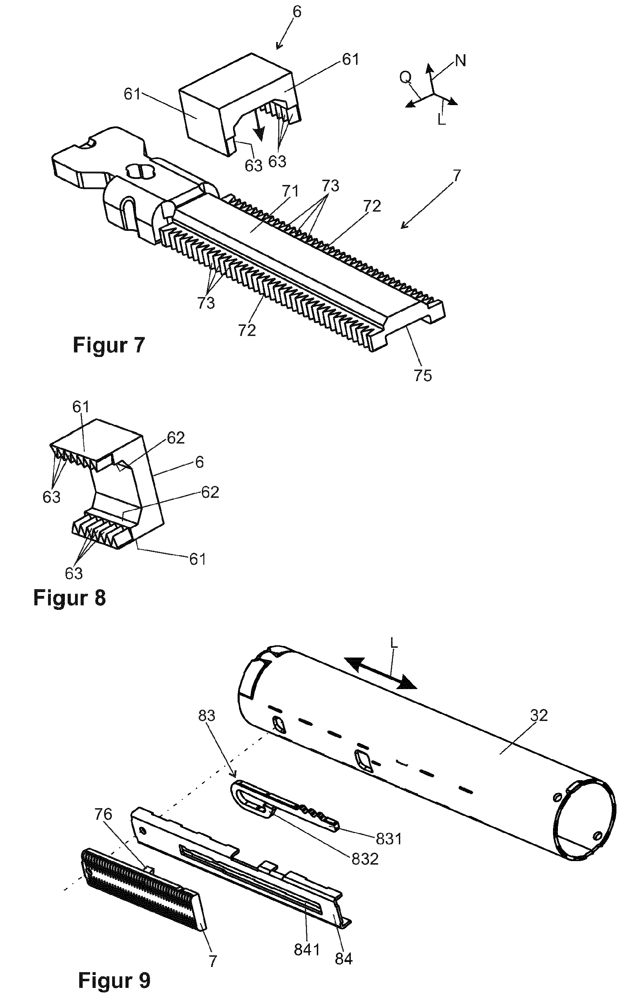

In Figur 7 ist ein Eingriffselement 7 dargestellt, welches auf seinen beiden Randseiten 61 randseitig, quer zur Normalenrichtung N vorstehende Formschlusselemente 73 aufweist, welche jeweils als gerade Verzahnung mit geraden, parallel zur Normalenrichtung N verlaufenden Zähnen ausgebildet ist. Entsprechend weist das passende Arretierelement 6 auf den Innenseiten der Seitenarme 61 gegeneinander gerichtete Formschlusselemente 63 in Form einer korrespondierenden Verzahnung auf, deren Zahnflanken ebenfalls parallel zur Normalenrichtung N verlaufen.

Zum Fixieren wird das Arretierteil 6 aus der in Figur 6 gezeigten Freigabe- oder Lösestellung mittels der Spanneinrichtung 4 entgegen der Normalenrichtung N auf die Oberseite 71 zu bewegt, bis das Eingriffselement 7 zwischen den Seitenarmen 61 aufgenommen ist, und die Formschlusselemente 63 und 73 zur Bildung eines in Längsrichtung wirksamen Formschlusses miteinander in Eingriff kommen. Dabei ist das Arretierelement 6 auch quer zur Längsrichtung formschlüssig auf dem Eingriffselement 7 formschlüssig gehalten.

In der Führungsnut 75 ist das Energieabsorptionselement 81 wie in Figur 1 und 2 erkennbar aufgenommen. In unverformtem Zustand sitzt das Eingriffselement 7 mit der Führungsnut 75 auf einem Halteabschnitt 811 des Energieabsorptionselements 81, der eine geringere Breite hat als die Breite der besagten Führungsnut 75. An den Halteabschnitt 811 schließt sich ein Verformungsabschnitt 812 an, der eine größere Breite hat als die innere Breite der Führungsnut 75. Weiters kann das Eingriffselement 7 eine Führungsnutverengung 751 aufweise, die ebenfalls als Deformationsorgan ausgebildet ist und bei einer Verlagerung des Eingriffselements 7 relativ zum Energieabsorptionselement 81 das Energieabsorptionselement 81 deformiert.

Im normalen Betrieb ist das Eingriffselement 7 in Längsrichtung in dem Haltebereich 811 formschlüssig gehalten, und kann insbesondere nicht in den Verformungsbereich 812 verschoben werden. In Crashfall wirkt auf das lenkradseitige Ende der Lenkspindel 31 eine hohe Crashkraft, welche den Verformungsbereich 812 in die Führungsnut 75 in Längsrichtung hineinpresst, wobei der Verformungsbereich 812 in dem Eingriffselement 7 zusammengequetscht, d.h. plastisch verformt wird, wodurch kinetische Energie absorbiert wird. Das Eingriffselement 7 ist im Crashfall durch den Eingriff des Arretierteils 6 festgelegt, so dass sich das Mantelrohr 31 zusammen mit dem Energieabsorptionselement 81 relativ zu dem Eingriffselement 7 verlagert und dabei das Energieabsorptionselement 81 durch das Eingriffselement 7 deformiert wird.

Die Führungsnut 75 wirkt folglich im Crashfall gleichzeitig als Führungs- und Deformationselement, welches integral einstückig mit dem Eingriffselement 7 ausgebildet ist.

Figur 9 zeigt eine weitere Ausführungsform, bei der als Energieabsorptionselement ein Biegestreifen 83 eingesetzt ist, der ein erstes Ende 831 an einem in Längsrichtung weisenden ersten Schenkel hat, welche über eine Umbiegung von etwa 180° mit einem zweiten, ebenfalls in Längsrichtung weisenden Schenkel verbunden ist, der an seinem Ende einen umgebogenen Haken 832 hat. Das erste Ende 831 stützt sich in Längsrichtung gegen ein U-förmiges Halteprofil 84 ab, welches an dem Mantelrohr 32 befestigt ist.

Das Eingriffselement 7 weist als Führungsmittel einen Mitnehmerstift 76 auf, der durch einen in Längsrichtung verlaufenden Schlitz 841 in dem Halteprofil 84 hindurchgeführt ist und den Haken 832 des Biegestreifens 83 hintergreift.

Im Crashfall gleitet der Mitnehmerstift 76 in dem Schlitz geführt entlang, und nimmt den Haken 832 in Längsrichtung in Richtung auf das Ende 831 zu mit, wobei der Biegestreifen 83 fortlaufend umgebogen wird, d.h. die Umbiegung durch den Biegestreifen 83 hindurchläuft. Durch diese plastische Biegeumformung wird kinetische Crash-Energie in Verformung umgesetzt und absorbiert. Dabei wirkt der Mitnehmerstift 76 gleichermaßen als Führungs- und Deformationselement, welches bevorzugt einstückig mit dem Eingriffselement 7 ausgebildet sein kann.

### Bezugszeichenliste

- 1: Lenksäule
- 2: Trageinheit
- 21: Befestigungsmittel
- 22, 23: Seitenwangen
- 24: Schwenkachse
- 25: Langloch
- 3: Stelleinheit
- 31: Lenkspindel
- 32: Mantelrohr
- 33: Manteleinheit
- 34: Befestigungsabschnitt
- 4: Spanneinrichtung
- 41: Spannbolzen
- 42: Betätigungshebel
- 43: Hubscheibe
- 5: Fixierelement
- 53: Druckscheibe
- 6: Arretierelement
- 61: Seitenarm
- 62: Innenseite
- 63: Formschlusselemente
- 7: Eingriffselement
- 71: Oberseite
- 72: Randseite
- 73: Formschlusselemente
- 74: freier Bereich
- 75: Führungsnut
- 76: Mitnehmerstift
- 8: Energieabsorptionsvorrichtung
- 81: Energieabsorptionselement
- 82: Befestigungselemente
- 83: Biegestreifen
- 831: Ende
- 832: Haken
- 84: Halteprofil
- 841: Schlitz
- L: Längsachse
- H: Höhenrichtung
- S: Spannachse
- N: Normalenrichtung
- Q: Querrichtung

## Patentansprüche

1. Lenksäule (1) für ein Kraftfahrzeug, umfassend
eine äußere Manteleinheit (33), die mit der Karosserie eines Kraftfahrzeugs direkt oder indirekt verbindbar ist und in der ein Mantelrohr (32) in Längsrichtung verstellbar gehaltert ist, in dem eine Lenkspindel (31) um ihre in Längsrichtung liegende Längsachse (L) drehbar gelagert ist,
und eine Spanneinrichtung (4), die in eine Fixierstellung bringbar ist, in der sie die Manteleinheit (33) relativ zu dem Mantelrohr (32) festlegt, und in eine Freigabestellung, in der sie eine Verstellung des Mantelrohrs (32) relativ zur Manteleinheit (33) zumindest in Längsrichtung freigibt,
wobei die Spanneinrichtung (4) ein in Längsrichtung erstrecktes, an dem Mantelrohr (32) abgestütztes Eingriffselement (7) mit einer parallel zur Längsachse (L) liegenden Oberseite (71) und seitlichen Randseiten (72) aufweist und ein in Längsrichtung an der Manteleinheit (33) abgestütztes Arretierelement (6), welches von der Spanneinrichtung (4) zur Einstellung der Fixierstellung in Normalenrichtung (N) der Oberseite (71) gegen das Eingriffselement (7) bewegbar ist, wobei an dem Arretierelement (6) und dem Eingriffselement (7) ausgebildete komplementäre Formschlusselemente (63, 73) zur Erzeugung eines in Längsrichtung wirksamen Formschlusses miteinander in Eingriff bringbar sind,
und wobei eine Energieabsorptionsvorrichtung (8) zwischen dem Mantelrohr (32) und dem Eingriffselement (7) angeordnet ist,
wobei zumindest auf einer der Randseiten (72) des Eingriffselements (7) seitliche Formschlusselemente (73) ausgebildet sind.
**dadurch gekennzeichnet,**
**dass** das Arretierelement (6) zumindest einen Seitenarm (61) aufweist, der in Fixierstellung eine Randseite (72) umgreift und mit den seitlichen Formschlusselementen (73) der Randseite (72) korrespondierende Formschlusselemente (63) aufweist.

2. Lenksäule nach Anspruch 1, **dadurch gekennzeichnet, dass** das Arretierelement (6) zwei einander gegenüberliegende Seitenarme (61) aufweist, zwischen denen das Eingriffselement (7) aufnehmbar ist.

3. Lenksäule nach einem der vorangehenden Ansprüche, **dadurch gekennzeichnet, dass** die seitlichen Formschlusselemente (72, 62) schräg gegen die Normalenrichtung (N) geneigt sind.

4. Lenksäule nach einem der vorangehenden Ansprüche, **dadurch gekennzeichnet, dass** die Formschlusselemente (72, 62) zumindest abschnittweise konvex oder konkav ausgebildet sind.

5. Lenksäule nach einem der vorangehenden Ansprüche, **dadurch gekennzeichnet, dass** das Eingriffselement (7) zumindest teilweise auf der Oberseite (71) Formschlusselemente (73) aufweist.

6. Lenksäule nach Anspruch 5, **dadurch gekennzeichnet, dass** die Formschlusselemente (73) zumindest teilweise von der Oberseite (71) zu mindestens einer der Randseiten (72) durchgehend ausgebildet sind.

7. Lenksäule nach einem der vorangehenden Ansprüche, **dadurch gekennzeichnet, dass** das Eingriffselement (7) ein Deformationselement (75, 76) aufweist, das mit einem zwischen dem Eingriffselement (7) und dem Mantelrohr (32) angeordneten Energieabsorptionselement (8) wirkverbunden ist.

8. Lenksäule nach einem der vorangehenden Ansprüche, **dadurch gekennzeichnet, dass** das Eingriffselement (7) Führungsmittel (75, 76) aufweist.

9. Lenksäule nach einem der vorangehenden Ansprüche 7 bis 8, **dadurch gekennzeichnet, dass** das Energieabsorptionselement (7) einen in Längsrichtung langgestreckten, an dem Mantelrohr (32) befestigten Verformungsstreifen (81) aufweist, der in Längsrichtung unter plastischer Verformung an einem Deformationselement (75) entlang bewegbar ist.

10. Lenksäule nach einem der vorangehenden Ansprüche, **dadurch gekennzeichnet, dass** die Formschlusselemente (63, 73) als Verzahnung mit quer zur Längsrichtung verlaufenden Zähnen (63, 73) ausgebildet sind.

## Claims

1. A steering column (1) for a motor vehicle, comprising
an outer casing unit (33) which can be connected directly or indirectly to the body of a motor vehicle and in which there is retained so as to be able to be displaced in the longitudinal direction a casing pipe (32), in which a steering spindle (31) is rotatably supported about the longitudinal axis (L) thereof located in the longitudinal direction, and a clamping device (4) which can be moved into a fixing position, in which it secures the casing unit (33) relative to the casing pipe (32), and a release position, in which it releases a displacement of the casing pipe (32) relative to the casing unit (33) at least in the longitudinal direction, wherein the clamping device (4) has an engagement element (7) which is supported on the casing pipe (32) and which extends in the longitudinal direction and which has an upper side (71) which is located parallel with the longitudinal axis (L) and lateral edge sides (72) and a locking element (6) which is supported in the longitudinal direction on the casing unit (33) and which can be moved by the clamping device (4) in order to adjust the fixing position in the normal direction (N) of the upper side (71) against the engagement element (7), wherein complementary positive-locking elements (63, 73) which are constructed on the locking element (6) and the engagement element (7) can be brought into engagement with each other in order to produce a positive-locking connection which is effective in the longitudinal direction and wherein an energy absorption device (8) is arranged between the casing pipe (32) and the engagement element (7),
wherein lateral positive-locking elements (73) are constructed at least on one of the edge sides (72) of the engagement element (7),
**characterized in that**
the locking element (6) has at least one side arm (61) which engages around an edge side (72) in the fixing position and which has positive-locking elements (63) which correspond to the lateral positive-locking elements (73) of the edge side (72).

2. The steering column as claimed in claim 1, **characterized in that** the locking element (6) has two mutually opposing side arms (61) between which the engagement element (7) can be received.

3. The steering column as claimed in one of the preceding claims, **characterized in that** the lateral positive-locking elements (72, 62) are inclined obliquely with respect to the normal direction (N).

4. The steering column as claimed in one of the preceding claims, **characterized in that** the positive-locking elements (72, 62) are at least partially constructed in a convex or concave manner.

5. The steering column as claimed in one of the preceding claims, **characterized in that** the engagement element (7) has positive-locking elements (73) at least partially on the upper side (71).

6. The steering column as claimed in claim 5, **characterized in that** the positive-locking elements (73) are constructed to extend at least partially from the upper side (71) to at least one of the edge sides (72).

7. The steering column as claimed in one of the preceding claims, **characterized in that** the engagement element (7) has a deformation element (75, 76) which is operationally connected to an energy absorption element (8) which is arranged between the engagement element (7) and the casing pipe (32).

8. The steering column as claimed in one of the preceding claims, **characterized in that** the engagement element (7) has guiding means (75, 76).

9. The steering column as claimed in one of the preceding claims 7 to 8, **characterized in that** the energy absorption element (7) has a deformation strip (81) which is elongate in the longitudinal direction and which is secured to the casing pipe (32) and which can be moved in the longitudinal direction with plastic deformation along a deformation element (75).

10. The steering column as claimed in one of the preceding claims, **characterized in that** the positive-locking elements (63, 73) are constructed as a tooth arrangement with teeth (63, 73) which extend transversely relative to the longitudinal direction.

## Revendications

1. Colonne de direction (1) pour un véhicule automobile, comprenant une unité d'enveloppe extérieure (33), qui peut être reliée directement ou indirectement à la carrosserie d'un véhicule automobile et dans laquelle est maintenu un tube d'enveloppe (32) réglable dans le sens longitudinal, dans lequel un arbre de direction (31) est monté de manière à pouvoir tourner autour de son axe longitudinal (L) situé dans le sens longitudinal,
et un dispositif de serrage (4) qui peut être amené dans une position de fixation, dans laquelle il fixe l'unité d'enveloppe (33) par rapport au tube d'enveloppe (32), et dans une position de libération, dans laquelle il libère un déplacement du tube d'enveloppe (32) par rapport à l'unité d'enveloppe (33) au moins dans la direction longitudinale, le dispositif de serrage (4) présentant un élément d'engagement (7) s'étendant dans la direction longitudinale et s'appuyant sur le tube d'enveloppe (32), avec une face supérieure (71) parallèle à l'axe longitudinal (L) et des côtés de bord latéraux (72), et un élément de blocage (6) s'appuyant dans la direction longitudinale sur l'unité d'enveloppe (33), qui peut être déplacé par le dispositif de serrage (4) contre l'élément d'engagement (7) pour le réglage de la position de fixation dans la direction normale (N) de la face supérieure (71), des éléments complémentaires à engagement positif (63, 73) formés sur l'élément d'arrêt (6) et sur l'élément d'engagement (7) pouvant être amenés en prise les uns avec les autres pour produire un engagement positif efficace dans la direction longitudinale,
et un dispositif d'absorption d'énergie (8) étant disposé entre le tube d'enveloppe (32) et l'élément d'engagement (7), des éléments latéraux à engagement positif (73) étant formés au moins sur l'un des côtés de bord (72) de l'élément d'engagement (7).
**caractérisé en ce que**
que l'élément d'arrêt (6) présente au moins un bras latéral (61) qui, en position de fixation, entoure un côté de bord (72) et présente des éléments d'engagement positif (63) correspondant aux éléments d'engagement positif (73) latéraux du côté de bord (72).

2. Colonne de direction selon la revendication 1, **caractérisée en ce que** l'élément d'arrêt (6) présente deux bras latéraux (61) opposés l'un à l'autre, entre lesquels l'élément d'engagement (7) peut être logé.

3. Colonne de direction selon l'une des revendications précédentes, **caractérisée en ce que** les éléments latéraux de liaison par complémentarité de forme (72, 62) sont inclinés par rapport à la direction normale (N).

4. Colonne de direction selon l'une des revendications précédentes, **caractérisée en ce que** les éléments de liaison par la forme (72, 62) sont convexes ou concaves au moins par sections.

5. Colonne de direction selon l'une des revendications précédentes, **caractérisée en ce que** l'élément d'engagement (7) présente au moins partiellement sur la face supérieure (71) des éléments d'engagement positif (73).

6. Colonne de direction selon la revendication 5, **caractérisée en ce que** les éléments de fermeture de forme (73) sont formés au moins partiellement de manière continue depuis la face supérieure (71) jusqu'à au moins l'un des côtés de bord (72).

7. Colonne de direction selon l'une des revendications précédentes, **caractérisée en ce que** l'élément d'engagement (7) présente un élément de déformation (75, 76) qui est en liaison fonctionnelle avec un élément d'absorption d'énergie (8) disposé entre l'élément d'engagement (7) et le tube d'enveloppe (32).

8. Colonne de direction selon l'une des revendications précédentes, **caractérisée en ce que** l'élément d'engagement (7) comporte des moyens de guidage (75, 76).

9. Colonne de direction selon l'une quelconque des revendications précédentes 7 à 8, **caractérisée en ce que** l'élément d'absorption d'énergie (7) comporte une bande de déformation (81) allongée dans le sens longitudinal et fixée au tube d'enveloppe (32), qui peut se déplacer dans le sens longitudinal en subissant une déformation plastique le long d'un élément de déformation (75).

10. Colonne de direction selon l'une des revendications précédentes, **caractérisée en ce que** les éléments de liaison par la forme (63, 73) sont réalisés sous forme de denture avec des dents (63, 73) s'étendant transversalement à la direction longitudinale.
